# FASCICULE DE BREVET EUROPEEN

(11) **EP 3 658 705 B1**
(45) Date de publication et mention de la délivrance du brevet: **24.07.2024**
(21) Numéro de dépôt: 18749432.3
(22) Date de dépôt: 14.06.2018
(51) Int. Cl.: D04B 21/12

(54) **COMPLEXE DE COIFFE D'HABILLAGE D'UNE GARNITURE D'ASSISE OU DE DOSSIER DE SIEGE DE VEHICULE AUTOMOBILE**
KOMPLEX EINER ABDECKKAPPE FÜR EIN SITZ- ODER RÜCKENLEHNENPOLSTER EINES KRAFTFAHRZEUGSITZES
COMPLEX OF A COVER FOR A SEAT OR BACKREST UPHOLSTERY OF A MOTOR VEHICLE SEAT

(30) Priorité: 24.07.2017 FR 1756990
(43) Date de publication de la demande: 03.06.2020
(73) Titulaire: Stellantis Auto SAS, 78300 Poissy (FR)
(72) Inventeur: THIEL, Marc, 25400 Exincourt (FR); COMBEAU, Frederic, 25750 Desandans (FR); VOITOT, Jean, 25250 Onans (FR)
(86) Numéro de dépôt international: PCT/FR2018/051406
(87) Numéro de publication internationale: WO 2019/020877

(56) Documents cités:
- EP-A1- 2 289 842
- EP-A1- 2 529 664
- EP-A2- 1 743 800
- FR-A1- 2 841 840
- FR-A1- 2 868 368
- FR-A1- 2 868 368
- US-A1- 2016 031 350

## Description

### Domaine de l'invention

La présente invention se rapporte d'une manière générale au domaine des garnitures pour assises et dossiers de sièges de véhicules automobiles.

Elle concerne plus particulièrement un complexe de coiffe d'habillage pour une telle garniture d'assise ou de dossier.

### Arrière-plan de l'invention

L'assise et le dossier d'un siège de véhicule automobile comportent classiquement une armature recouverte d'une garniture.

Une telle garniture se présente généralement sous la forme d'une matelassure interne revêtue d'une coiffe d'habillage.

Destinée à assurer le confort dynamique du passager, la matelassure est constituée le plus souvent par un bloc de mousse de polyuréthane généralement moulé selon la forme finale souhaitée pour l'élément de siège.

Afin de respecter les exigences normatives en termes de fatigue dynamique et d'amortissement des vibrations subies par le siège, les mousses de polyuréthanne utilisées doivent présenter une densité et une portance suffisamment élevées pour assurer une bonne résistance à la compression et éviter au passager de s'affaisser dans le siège, y compris lorsqu'il y demeure assis pendant plusieurs heures durant de longs trajets.

Ce bloc de mousse est d'abord monté sur l'armature d'assise ou de dossier du siège puis revêtu ensuite d'une coiffe d'habillage constituée d'un revêtement externe en cuir ou dans un textile tissé ou non tissé réalisé à partir d'une matière naturelle ou synthétique. La souplesse de la coiffe lui permet de s'adapter à la forme donnée à la matelassure, en particulier aux éventuels rappels de style définis par la matelassure.

Afin d'améliorer le rendu esthétique du siège, il est connu de réaliser au niveau du médaillon central d'une telle coiffe, un certain nombre de coutures visibles d'aspect donnant un effet de relief limité.

De manière à obtenir un effet tridimensionnel plus marqué, il est connu de prévoir au niveau de la coiffe d'habillage une couche de mousse qui est rapportée par couture sur la face interne du revêtement externe.

La demande de brevet américaine US 2016/0031350 divulgue ainsi un complexe pour coiffe d'habillage comprenant deux couches superposées de mousse rapportées par couture sur la face interne d'un revêtement externe.

A l'usage, l'effet relief obtenu demeure toutefois limité.

On connaît également de la demande de brevet EP 2 681 074 A1, un complexe destiné à former le médaillon central d'une coiffe et comprenant :
- un revêtement externe en textile, en cuir ou en matière synthétique ;
- une feuille interne porteuse réalisée dans un matériau textile ; et
- une couche de mousse interposée entre ce revêtement externe et cette feuille interne.

Ces différentes couches constituant le complexe sont solidarisées les unes aux autres par une pluralité de lignes de coutures donnant cet effet de relief.

La présence de la feuille interne permet de « porter » le complexe et ainsi d'obtenir un effet de relief beaucoup plus prononcé.

Cette feuille interne permet en outre d'éviter que les boucles inférieures des coutures ne soient au contact direct de la couche de mousse ce qui évite sa détérioration par effet de cisaillement.

Toutefois, il s'avère à l'usage que le confort procuré par ce type de complexe n'est pas optimal, notamment du fait de l'apparition d'humidité au niveau des surfaces de contact entre le passager du siège et la coiffe.

Afin d'assurer un certain niveau de ventilation permettant d'évacuer cette humidité, il est connu d'utiliser une couche de mousse à cellules ouvertes et de pratiquer des perforations dans le revêtement externe ainsi que dans la feuille interne porteuse. Il est également connu d'utiliser un système de ventilation mécanique, comme dans la demande de brevet FR 2 868 368 A1.

Malheureusement, cela a pour effet d'entrainer certains défauts d'aspect dus à la remontée en surface des portions de ces lignes de coutures situées au niveau des zones perforées de la feuille interne porteuse (les fils se trouvant directement au contact de la couche de mousse).

### Objet et résumé de l'invention

La présente invention vise donc à améliorer le rendu esthétique d'un tel complexe de coiffe d'habillage assurant une fonction de ventilation.

Elle propose à cet effet un complexe de coiffe d'habillage d'une garniture d'assise ou de dossier de véhicule automobile, comportant :
- un revêtement externe perméable à l'air en textile, en cuir ou en matière synthétique,
- une feuille interne porteuse également perméable à l'air et réalisée dans un matériau textile, et
- une couche de mousse à cellules ouvertes interposée entre ledit revêtement externe et ladite feuille interne porteuse,
ledit revêtement externe, ladite couche de mousse et ladite feuille interne porteuse étant solidarisées les unes aux autres par l'intermédiaire d'une pluralité de lignes de coutures traversant les trois couches et ladite feuille interne porteuse étant constituée par un textile à mailles tridimensionnelles.

La relative rigidité d'un tel textile à mailles tridimensionnelles permet d'assurer la tenue géométrique du complexe en évitant toute remontée en surface de certaines portions des lignes de coutures.

Ce type de textile offre en outre, de par son extensibilité, un niveau de confort pour l'occupant nettement supérieur à celui procuré par d'autres matériaux textiles naturellement perméables à l'air ou micro-perforés.

Selon des caractéristiques préférées dudit complexe :
- ledit textile constituant ladite feuille interne porteuse est réalisé par tissage ou tricotage à partir de fibres polymères d'origine naturelle ou synthétique ;
- ledit textile constituant ladite feuille interne porteuse présente une structure en nid d'abeille ;
- ladite couche de mousse à cellules ouvertes est réticulée ;
- ladite couche de mousse à cellules ouvertes présente une épaisseur d'au moins 5 mm ;
- ladite couche de mousse à cellules ouvertes présente une portance comprise entre 3,5 et 6 kPa ;
- ladite couche de mousse à cellules ouvertes présente une densité comprise entre 25 et 50 kg/m^{3 ;}
- ladite couche de mousse à cellules ouvertes est constituée d'une pièce unique de même dimension que celles dudit revêtement externe et de ladite feuille interne porteuse ; et/ou
- ladite couche de mousse à cellules ouvertes est constituée de plusieurs pièces séparées deux à deux par une ligne de couture réalisée directement entre ledit revêtement externe et ladite feuille interne porteuse.

L'invention vise également sous un second aspect une garniture d'assise ou de dossier de siège pour véhicule automobile comportant au moins un tel complexe.

### Brève description des dessins

L'exposé de l'invention sera maintenant poursuivi par la description détaillée d'un exemple de réalisation, donnée ci-après à titre illustratif mais non limitatif, en référence aux dessins annexés, sur lesquels :
- la figure 1 représente une vue en éclaté en perspective d'un siège de véhicule automobile doté d'une garniture d'assise et d'une garniture de dossier comprenant chacune une coiffe d'habillage selon l'invention ;
- la figure 2 est une vue en coupe longitudinale médiane du siège de la figure 1 ;
- la figure 3 représente une vue de dessus du siège de la figure 1 ; et
- la figure 4 représente un agrandissement en coupe du complexe selon l'invention formant les médaillons centraux de l'assise et du dossier du siège de la figure 1.

### Description détaillée d'un mode préféré de réalisation

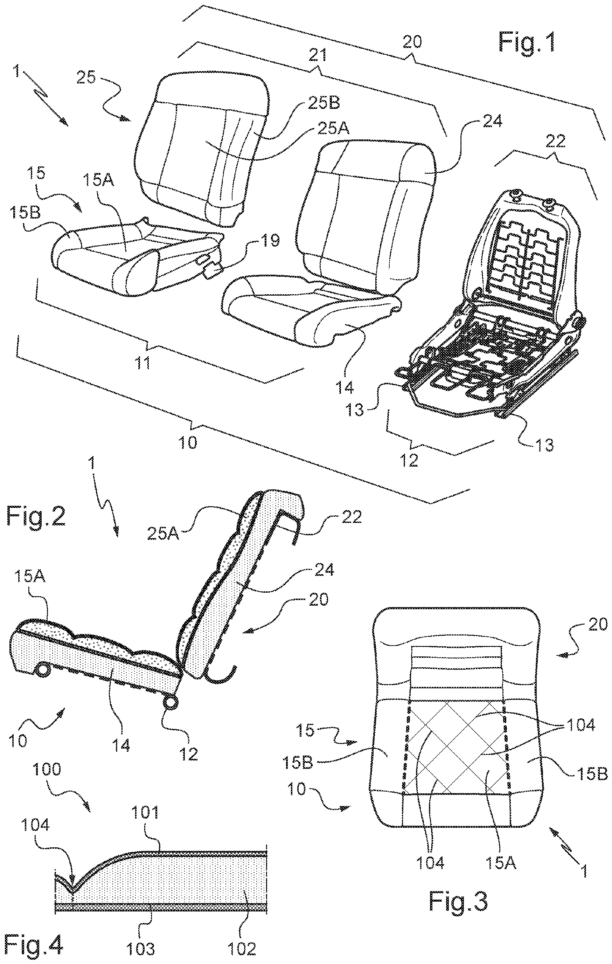

Les figures 1 à 3 représentent un siège 1 de véhicule automobile comportant une assise 10 sur laquelle est monté à pivotement autour d'un axe transversal un dossier 20 éventuellement surmonté d'un appuie-tête non représenté.

Comme illustré par la vue éclatée de la figure 1, l'assise 10 et le dossier 20 comprennent chacun une garniture 11, 21 fixée sur une armature correspondante 12, 22, généralement métallique et sur laquelle est tendue une nappe de suspension élastique non représentée.

L'armature 12 de l'assise 10 peut éventuellement être amarrée à coulissement sur le plancher du véhicule par l'intermédiaire d'un couple de glissières 13.

Chaque garniture 11, 21 se compose d'une matelassure interne 14, 24 recouverte d'une coiffe d'habillage 15, 25.

Les matelassures 14, 24 de l'assise 10 et du dossier 20 sont constituées par un bloc moulé de mousse de polyuréthane à cellules ouvertes présentant avantageusement une épaisseur comprise entre 40 et 80 mm et une densité supérieure ou égale à 40 kg/m3.

L'utilisation d'une telle mousse dite dynamique pour les matelassures 14, 24 permet d'assurer un excellent amortissement des vibrations transmises à l'assise et au dossier du siège pendant les phases de roulage du véhicule.

Le bloc de mousse, constituant la matelassure 14 de l'assise 10 destinée à supporter la majeure partie de la masse du passager, présente avantageusement une densité supérieure à celle du bloc de mousse 24 constituant la matelassure du dossier 20.

Plus précisément, la densité du bloc de mousse formant la matelassure 14 de l'assise 10 sera de préférence comprise entre 60 et 75 kg/m3, tandis que celle du bloc de mousse formant la matelassure 24 du dossier 20 sera de préférence comprise entre 40 et 55 kg/m3.

Les blocs de mousse 14, 24 présentent en outre une portance ou dureté comprise entre 4 et 8 kPa, de sorte à assurer une résistance à la compression suffisante pour éviter au passager de s'affaisser dans le siège 1, y compris lorsqu'il y demeure assis pendant plusieurs heures durant de longs trajets.

On précise que la portance telle que mentionnée dans le paragraphe précédent et dans la suite de cette demande correspond à la pression nécessaire pour compresser la mousse de 40% de son épaisseur initiale tel que défini par la norme internationale DIN EN ISO 2439.

En variante, les matelassures 14, 24 (et en particulier celle d'assise 14) peuvent comprendre un ou plusieurs inserts de mélamine ou de mousse viscoélastique ménagés à l'intérieur du bloc de mousse de polyuréthanne afin d'améliorer localement la portance.

Comme illustré par la figure 1, les coiffes d'habillage 15, 25 respectivement de l'assise 10 et du dossier 20 comprennent chacune un médaillon central 15A, 25A, sensiblement plan, entouré, au moins partiellement, d'une zone périphérique 15B, 25B de forme convexe, de sorte à former un bossage périphérique de maintien de l'occupant du siège.

Comme illustré par les figures 2 et 4, les médaillons centraux 15A, 25A des coiffes 15, 25 sont chacun formés par un complexe 100 comprenant :
- un revêtement externe perméable à l'air 101 réalisé en textile (tissé ou non), en cuir ou en matière synthétique ;
- une feuille interne porteuse 103 également perméable à l'air et constituée par un textile à mailles tridimensionnelles ; et
- une couche de mousse à cellules ouvertes 102 interposée entre ce revêtement externe et cette feuille interne.

Ces trois couches 101, 102, 103 sont solidarisées les unes aux autres par l'intermédiaire de lignes de coutures 104 permettant en outre de générer un motif décoratif en relief, par exemple en forme de quadrillage tel qu'illustré par la figure 3.

Selon certaines variantes, les lignes de coutures peuvent bien évidemment présenter des profils différents définissant d'autres motifs décoratifs (par exemple, en forme de bracelet de montre).

La couche centrale de mousse 102 peut être constituée d'une pièce unique de même dimension que celles du revêtement externe et de la feuille interne porteuse.

Afin d'obtenir un effet tridimensionnel encore plus marqué, cette couche centrale de mousse peut également être constituée de plusieurs pièces séparées deux à deux par une ligne de couture réalisée directement entre le revêtement externe et la feuille interne porteuse tel que décrit dans la demande EP 2 681 074.

L'ensemble des couches constituant ce complexe 100 étant perméables, l'air peut le traverser de part en part (ainsi que la matelassure interne 14, 24 située en dessous et également perméable) pour assurer une certaine ventilation des parties du corps du passager destinées à venir en appui sur la coiffe 15, 25 et éviter l'apparition d'humidité au niveau des surfaces de contact entre ce passager et la coiffe.

Le revêtement externe 101 présente avantageusement une épaisseur comprise entre 0,5 et 2 mm, et préférentiellement entre 1 à 1,5 mm.

Sa perméabilité à l'air est soit due à la porosité naturelle du matériau le constituant (cas par exemple d'un textile non-tissé) ou obtenue par la réalisation de micro-perforations régulièrement agencées sur l'ensemble de sa surface (cas par exemple d'un cuir naturel traité ou d'un matériau synthétique).

La couche de mousse 102, de préférence obtenue à base d'une résine de polyuréthanne, présente avantageusement une épaisseur d'au moins 5 mm.

Sa densité est de préférence comprise entre 25 et 50 kg/m³ tandis que sa portance (correspond à la pression nécessaire pour compresser la mousse de 40% de son épaisseur initiale tel que défini suivant la norme internationale DIN EN ISO 2439) est avantageusement comprise entre 3,5 et 6 kPa.

Cette couche de mousse 102 est également de préférence réticulée, ce qui signifie qu'elle a subi un processus de réticulation durant laquelle les chaînes de polymères la constituant sont liées entre-elles par des ponts ou des liaisons chimiques.

Ce caractère réticulé de la mousse permet une amélioration de ses performances mécaniques, et en particulier de sa résistance à la compression ce qui assure le maintien d'un espace de ventilation suffisant lorsque l'occupant vient s'assoir sur le siège tout en préservant un niveau d'élasticité convenable afin de maintenir un bon confort d'accueil.

En outre, cette réticulation permet d'obtenir des mousses dont la quasi-totalité des cellules sont ouvertes et présentant des dimensions supérieures à celles que l'on retrouve sur des mousses à cellules ouvertes non réticulées, ce qui a pour effet d'augmenter très sensiblement le niveau de perméabilité à l'air.

La réticulation peut être obtenue par un procédé chimique, par exemple en ajoutant un agent s'activant à une température donnée, ou physique par exemple par bombardement d'électrons.

Le textile constituant la feuille interne porteuse à mailles tridimensionnelles 103 est réalisé par tissage ou tricotage à partir de fibres polymères d'origine naturelle telles que la cellulose, ou synthétique telles que le polyester, le polyamide ou le polypropylène.

Il présente en outre avantageusement une structure en nid d'abeille dont les alvéoles présentent une largeur comprise de préférence entre 0,2 et 1 mm.

Ce type de structure maillée présente une relative rigidité permettant d'assurer la tenue géométrique du complexe tout en offrant de par son extensibilité un niveau de confort pour l'occupant nettement supérieur à celui procuré par d'autres matériaux textiles naturellement perméables à l'air ou perforés.

Les zones périphériques 15B, 25B des coiffes 15, 25 peuvent être également être réalisées à partir du complexe 100 ou constituées simplement par un revêtement externe en textile (tissé ou non), en cuir ou en matière synthétique et avantageusement perméable à l'air.

Afin d'assurer une bonne tenue de chaque coiffe 15, 25 sur la matelassure correspondante 14, 24, des moyens de rappel non représentés sont prévus sur les coiffes 15, 25 pour coopérer avec des moyens complémentaires ménagés dans les matelassures 14, 24.

Ces moyens de rappel, bien connus de l'homme du métier, sont par exemple constitués par des bandes de toile dont une première extrémité est repliée puis cousue sur l'envers de la coiffe au niveau des lignes longitudinales de jonction entre le médaillon central et les zones périphériques (ces lignes de jonction étant représentées en pointillés sur la figure 3), tandis que leur seconde extrémité est solidaire d'une tige rigide apte à être fixée sur une tringle métallique correspondante noyée dans la matelassure.

Pour ce faire, la bande de toile est passée au travers d'une tranchée ménagée dans la matelassure puis étirée de sorte à l'amener à proximité de la tringle, ce qui a pour effet de tendre la coiffe et de comprimer la matelassure.

La tige rigide est ensuite fixée à la tringle à l'aide d'agrafes de type « nez de porc », le relâchement de la bande de toile entrainant alors la détente partielle de la matelassure et de la coiffe.

On notera que l'absence de moyens de rappel au niveau des médaillons centraux 15A, 25A des coiffes 15, 25 permet d'éviter l'apparition de points durs sur la surface de ces médaillons accueillant respectivement le postérieur et le dos du passager, de sorte à ne pas détériorer le confort.

En variante, les moyens de rappel peuvent être différents et par exemple conformes à ceux décrits dans la demande française FR 2 967 949, ou bien encore comporter des bandes mâles de Velcro^{®} cousues sur l'envers de la coiffe et coopérant avec des bandes femelles à boucles ménagées dans les tranchées de la matelassure.

## Revendications

1. Complexe de coiffe d'habillage (15 ; 25) d'une garniture d'assise (11) ou de dossier (21) de véhicule automobile, comportant :
- un revêtement externe (101) perméable à l'air en textile, en cuir ou en matière synthétique,
- une feuille interne porteuse (103) également perméable à l'air et réalisée dans un matériau textile, et
- une couche de mousse à cellules ouvertes (102) interposée entre ledit revêtement externe (101) et ladite feuille interne porteuse (103),
ladite feuille interne porteuse (103) étant constituée par un textile à mailles tridimensionnelles,
**caractérisée en ce que** ledit revêtement externe (101), ladite couche de mousse (102) et ladite feuille interne porteuse (103) sont solidarisées les unes aux autres par l'intermédiaire d'une pluralité de lignes de coutures (104) traversant les trois couches.

2. Complexe de coiffe d'habillage selon la revendication 1, **caractérisé en ce que** ledit textile constituant ladite feuille interne porteuse (103) est réalisé par tissage ou tricotage à partir de fibres polymères d'origine naturelle ou synthétique.

3. Complexe de coiffe d'habillage selon l'une des revendications 1 ou 2, **caractérisé en ce que** ledit textile constituant ladite feuille interne porteuse (103) présente une structure en nid d'abeille.

4. Complexe de coiffe d'habillage selon l'une des revendications 1 à 3, **caractérisé en ce que** ladite couche de mousse à cellules ouvertes (102) est réticulée.

5. Complexe de coiffe d'habillage selon l'une des revendications 1 à 4, **caractérisé en ce que** ladite couche de mousse à cellules ouvertes (102) présente une épaisseur d'au moins 5 mm.

6. Complexe de coiffe d'habillage selon l'une des revendications 1 à 5, **caractérisé en ce que** ladite couche de mousse à cellules ouvertes (102) présente une portance comprise entre 3,5 et 6 kPa.

7. Complexe de coiffe d'habillage selon l'une des revendications 1 à 6, **caractérisé en ce que** ladite couche de mousse à cellules ouvertes (102) présente une densité comprise entre 25 et 50 kg/m³.

8. Complexe de coiffe d'habillage selon l'une des revendications 1 à 7, **caractérisé en ce que** ladite couche de mousse à cellules ouvertes (102) est constituée d'une pièce unique de même dimension que celles dudit revêtement externe (101) et de ladite feuille interne porteuse (103).

9. Complexe de coiffe d'habillage selon l'une des revendications 1 à 7, **caractérisé en ce que** ladite couche de mousse à cellules ouvertes (102) est constituée de plusieurs pièces séparées deux à deux par une ligne de couture réalisée directement entre ledit revêtement externe (101) et ladite feuille interne porteuse (103).

10. Coiffe d'habillage d'une garniture d'assise ou de dossier de siège de véhicule automobile, **caractérisé en ce qu'**elle comporte au moins un complexe selon l'une des revendications 1 à 9.

## Patentansprüche

1. Abdeckkomplex (15; 25) eines Kraftfahrzeugsitzes (11) oder einer Rückenlehne (21), umfassend:
- eine luftdurchlässige äußere Umhüllung (101) aus Textil, Leder oder Kunststoff,
- eine innere Trägerfolie (103), die auch luftdurchlässig ist und aus einem textilen Material besteht, und
- Schicht aus offenzelligem Schaumstoff (102), die zwischen der äußeren Beschichtung (101) und der inneren Trägerfolie (103) angeordnet ist,
das innere Trägerblatt (103) aus einem Gewebe mit dreidimensionalen Maschen besteht,
**dadurch gekennzeichnet, dass** die äußere Abdeckung (101), die Schaumstoffschicht (102) und die innere Trägerfolie (103) mittels einer Vielzahl von Nählinien (104), die durch die drei Schichten gehen, aneinander befestigt sind.

2. Abdeckungskomplex nach Anspruch 1, **dadurch gekennzeichnet, dass** das Textil, das die innere Stützfolie (103) bildet, durch Weben oder Stricken aus Polymerfasern natürlichen oder synthetischen Ursprungs hergestellt ist.

3. Abdeckungskomplex nach einem der Ansprüche 1 oder 2, **dadurch gekennzeichnet, dass** das Textil, das die innere Stützfolie (103) bildet, eine Wabenstruktur aufweist.

4. Abdeckkappenkomplex nach einem der Ansprüche 1 bis 3, **dadurch gekennzeichnet, dass** die Schicht aus offenzelligem Schaum (102) vernetzt ist.

5. Abdeckkappenkomplex nach einem der Ansprüche 1 bis 4, **dadurch gekennzeichnet, dass** die Schicht aus offenzelligem Schaumstoff (102) eine Dicke von mindestens 5 mm aufweist.

6. Abdeckkappenkomplex nach einem der Ansprüche 1 bis 5, **dadurch gekennzeichnet, dass** die Schicht aus offenzelligem Schaumstoff (102) einen Hub zwischen 3,5 und 6 kPa aufweist.

7. Abdeckkappenkomplex nach einem der Ansprüche 1 bis 6, **dadurch gekennzeichnet, dass** die offenzellige Schaumschicht (102) eine Dichte zwischen 25 und 50 kg/m3 aufweist.

8. Abdeckkappenkomplex nach einem der Ansprüche 1 bis 7, **dadurch gekennzeichnet, dass** die Schicht aus offenzelligem Schaumstoff (102) aus einem einzigen Stück mit der gleichen Größe wie die der äußeren Abdeckung (101) und der inneren Trägerfolie (103) besteht.

9. Abdeckkappenkomplex nach einem der Ansprüche 1 bis 7, **dadurch gekennzeichnet, dass** die Schicht aus offenzelligem Schaumstoff (102) aus mehreren Teilen besteht, die paarweise durch eine Nählinie getrennt sind, die direkt zwischen der äußeren Abdeckung (101) und der inneren Trägerfolie (103) hergestellt ist.

10. Kappe zur Abdeckung eines Sitzpolsters oder einer Rückenlehne eines Kraftfahrzeugsitzes, **dadurch gekennzeichnet, dass** sie mindestens einen Komplex nach einem der Ansprüche 1 bis 9 umfasst.

## Claims

1. A covering complex (15; 25) of a motor vehicle seat (11) or backrest (21) comprising:
- an air-permeable outer covering (101) of textile, leather or synthetic material,
- an internal carrier sheet (103) which is also permeable to air and made of a textile material, and
- layer of open-cell foam (102) interposed between said outer coating (101) and said inner carrier sheet (103),
said inner carrier sheet (103) being constituted by a textile with three-dimensional meshes,
**characterized in that** said outer covering (101), said foam layer (102) and said inner carrier sheet (103) are secured to one another by means of a plurality of sewing lines (104) passing through the three layers.

2. Covering complex according to claim 1, **characterized in that** the said textile constituting the said internal supporting sheet (103) is produced by weaving or knitting from polymer fibers of natural or synthetic origin.

3. Covering cover complex according to either of claims 1 and 2, **characterized in that** the said textile constituting the said internal supporting sheet (103) has a honeycomb structure.

4. Covering cap complex according to one of claims 1 to 3, **characterized in that** the said layer of open-cell foam (102) is crosslinked.

5. Covering cap complex according to one of claims 1 to 4, **characterized in that** the said layer of open-cell foam (102) has a thickness of at least 5 mm.

6. Covering cap complex according to one of claims 1 to 5, **characterized in that** the said layer of open-cell foam (102) has a lift of between 3.5 and 6 kPa.

7. Covering cap complex according to one of claims 1 to 6, **characterized in that** the said layer of open-cell foam (102) has a density of between 25 and 50 kg/m3.

8. Covering cap complex according to one of claims 1 to 7, **characterized in that** the said layer of open-cell foam (102) consists of a single piece of the same size as those of the said outer covering (101) and of the said inner carrier sheet (103).

9. Covering cap complex according to one of claims 1 to 7, **characterized in that** the said layer of open-cell foam (102) consists of several parts separated in pairs by a sewing line made directly between the said outer covering (101) and the said inner carrier sheet (103).

10. Cap for covering a seat cushion or backrest of a motor vehicle seat, **characterized in that** it comprises at least one complex according to one of claims 1 to 9.
